# FASCICULE DE BREVET EUROPEEN

(11) **EP 4 260 786 B1**
(45) Date de publication et mention de la délivrance du brevet: **25.12.2024**
(21) Numéro de dépôt: 23165292.6
(22) Date de dépôt: 30.03.2023
(51) Int. Cl.: A47L 9/28

(54) **BASE DE CHARGE POUR ASPIRATEUR**
LADEBASIS FÜR EINEN STAUBSAUGER
CHARGING BASE FOR VACUUM CLEANER

(30) Priorité: 15.04.2022 FR 2203510
(43) Date de publication de la demande: 18.10.2023
(73) Titulaire: SEB S.A., 69130 Ecully (FR)
(72) Inventeur: RENARD, Sylvain, 69134 Ecully Cedex (FR); MORAUX, Amélie, 69134 Ecully Cedex (FR)
(74) Mandataire: Germain Maureau

(56) Documents cités:
- EP-A1- 3 772 305
- WO-A1-2015/070322
- WO-A1-2020/136366
- JP-A- 2021 019 762

## Description

### Domaine technique

La présente invention concerne le domaine des aspirateurs permettant d'aspirer des poussières et des déchets présents sur une surface à nettoyer, qui peut par exemple être du carrelage, du parquet, du stratifié, de la moquette ou un tapis.

### Etat de la technique

Un aspirateur, et notamment un aspirateur portatif, comporte de façon connue un carter principal équipé d'un conduit d'aspiration ; un dispositif de séparation et de collecte de déchets monté sur le carter principal ; un moteur d'aspiration logé dans le carter principal et configuré pour générer un flux d'air au travers du conduit d'aspiration et du dispositif de séparation et de collecte de déchets ; une poignée de préhension ; et une batterie rechargeable configurée pour alimenter électriquement l'aspirateur et logée dans un boîtier de batterie fixé, par exemple de manière amovible, au carter principal.

Durant les phases d'inutilisation d'un tel aspirateur, ce dernier est généralement stocké sur une base de charge comportant de façon connue :
- un corps de support configuré pour être fixé à un mur et pour supporter l'aspirateur dans une position de stockage, le corps de support comportant un logement de réception configuré pour recevoir au moins en partie le boîtier de batterie de l'aspirateur lorsque l'aspirateur est en position de stockage, et
- un connecteur électrique mâle coudé et fixé dans un logement d'insertion délimité par le corps de support, le connecteur électrique mâle faisant saille dans le logement de réception et étant configuré pour coopérer avec un connecteur électrique femelle, prévu sur le boîtier de batterie, lorsque le boîtier de batterie est reçu dans le logement de réception.

Il est connu de fixer le connecteur électrique mâle dans le logement d'insertion via une ouverture d'insertion débouchant dans une face arrière du corps de support. Une telle configuration de la base de charge requiert, pour la fixation du connecteur électrique mâle, les étapes suivantes :
- positionnement d'une extrémité libre d'une portion de connexion du connecteur électrique mâle en regard d'une ouverture de passage prévue sur le corps de support et configurée pour être orientée verticalement lorsque le corps de support est fixé à un mur, l'ouverture de passage débouchant d'une part dans le logement de réception et d'autre part dans le logement d'insertion,
- basculement du connecteur électrique mâle vers l'avant de manière à aligner un axe longitudinal de la portion de connexion du connecteur électrique mâle avec l'axe central de l'ouverture de passage, et
- coulissement de la portion de connexion dans l'ouverture de passage.

Ces différentes étapes étant réalisées dans un logement d'insertion de faible hauteur (afin de limiter l'encombrement en hauteur du corps de support) et via une ouverture d'insertion débouchant dans une face arrière du corps de support, la fixation du connecteur électrique mâle au corps de support s'avère complexe et fastidieuse.

Le document EP 3 772 305 A1 divulgue un support mural pour un aspirateur à piles. Le document JP 2021 019762 A divulgue un aspirateur rangé dans un support de charge. Le document WO 2020/136366 A1 divulgue un socle de rangement pour un aspirateur à piles. Le document WO 2015/070322 A1 divulgue un aspirateur portatif et dispositif de raccordement à un système d'aspiration central.

### Résumé de l'invention

La présente invention vise à remédier à tout ou partie de ces inconvénients.

Le problème technique à la base de l'invention consiste notamment à fournir une base de charge pour aspirateur qui soit de structure simple, fiable et économique.

A cet effet, la présente invention concerne une base de charge pour aspirateur, comportant au moins :
- un corps de support configuré pour être fixé à un mur, le corps de support comportant un logement de réception configuré pour recevoir au moins en partie un boîtier de batterie de l'aspirateur,
- un connecteur électrique mâle configuré pour être relié électriquement à un connecteur électrique femelle, prévu sur le boîtier de batterie, lorsque le boîtier de batterie est reçu dans le logement de réception, le connecteur électrique mâle étant coudé et étant fixé dans un logement d'insertion délimité par le corps de support,
- un organe de blocage, tel qu'une languette de blocage, configuré pour bloquer le connecteur électrique mâle dans le logement d'insertion, l'organe de blocage étant configuré pour autoriser une insertion du connecteur électrique mâle dans le logement d'insertion selon une direction d'insertion lorsque le connecteur électrique mâle présente une première orientation angulaire par rapport à un axe de pivotement qui est sensiblement parallèle à la direction d'insertion, et pour autoriser ensuite un pivotement du connecteur électrique mâle, par rapport au corps de support et selon l'axe de pivotement, de la première orientation angulaire à une deuxième orientation angulaire qui est différente de la première orientation angulaire, l'organe de blocage étant configuré pour bloquer en translation le connecteur électrique mâle par rapport au corps de support et selon la direction d'insertion lorsque le connecteur électrique mâle est reçu dans le logement d'insertion et est dans la deuxième orientation angulaire.

Une telle configuration de la base de charge selon la présente invention permet un assemblage aisé et fiable du connecteur électrique mâle sur le corps de support, tout en réduisant sensiblement les coûts de fabrication de la base de charge.

De plus, la présence d'un tel organe de blocage limite le risque de démontage par inadvertance du connecteur électrique mâle.

En outre, une telle configuration de l'organe de blocage évite notamment tout risque de déplacement du connecteur électrique mâle selon la direction d'insertion, en particulier lorsque le boîtier de batterie est inséré dans ou retiré hors du logement de réception et que le connecteur électrique femelle coopère directement avec le connecteur électrique mâle, et assure donc une connexion fiable entre le connecteur électrique femelle et le connecteur électrique mâle.

La base de charge peut en outre présenter une ou plusieurs des caractéristiques suivantes, prises seules ou en combinaison.

Selon un mode de réalisation de l'invention, l'axe de pivotement, et donc la direction d'insertion, s'étend sensiblement verticalement lorsque le corps de support est fixé à un mur. Une telle configuration de la base de charge permet à l'organe de blocage de bloquer en translation le connecteur électrique mâle selon une direction verticale et évite ainsi tout risque de glissement vers le haut ou le bas du connecteur électrique mâle par rapport au corps de support.

Selon un mode de réalisation de l'invention, le connecteur électrique mâle est configuré pour coopérer avec, et donc être inséré dans, le connecteur électrique femelle, c'est-à-dire pour être directement relié électriquement avec le connecteur électrique femelle, lorsque le boîtier de batterie est reçu dans le logement de réception.

Selon un mode de réalisation de l'invention, le corps de support est configuré pour supporter l'aspirateur dans une position de stockage, le logement de réception étant configuré pour recevoir au moins en partie le boîtier de batterie de l'aspirateur lorsque l'aspirateur est en position de stockage.

Selon un mode de réalisation de l'invention, les première et deuxième orientations angulaires sont décalées angulairement par rapport à l'axe de pivotement d'un angle de pivotement supérieur ou égal à 5°, de préférence supérieur à 45° et par exemple d'environ 90°.

Selon un mode de réalisation de l'invention, lorsque le connecteur électrique mâle est pivoté de la première orientation angulaire à la deuxième orientation angulaire, une partie du connecteur électrique mâle est déplacée, et par exemple glissée, entre l'organe de blocage et une surface de guidage qui est prévue sur le corps de support et qui est située en regard de l'organe de blocage. Une telle configuration de l'organe de blocage bloque en translation le connecteur électrique mâle selon une direction verticale et évite tout risque de glissement vers le haut ou le bas du connecteur électrique mâle. Plus spécifiquement, une telle configuration de l'organe de blocage évite tout risque de glissement vers le bas, en particulier lorsque le boîtier de batterie est reçu dans le logement de réception, et également tout risque de glissement vers le haut du connecteur électrique mâle lors du retrait du boîtier de batterie hors du logement de réception.

Selon un mode de réalisation de l'invention, l'organe de blocage est configuré pour bloquer en rotation le connecteur électrique mâle par rapport au corps de support et selon l'axe de pivotement lorsque le connecteur électrique mâle est dans la deuxième orientation angulaire. Avantageusement, dans la deuxième orientation angulaire, la partie du connecteur électrique mâle, située entre l'organe de blocage et la surface de guidage, est faiblement contrainte entre l'organe de blocage et la surface de guidage. Autrement dit, dans la deuxième orientation angulaire, ladite partie du connecteur électrique mâle est serrée entre l'organe de blocage et la surface de guidage avec une intensité de force de serrage qui autorise un démontage manuel. Ces dispositions limitent les risques de pivotement involontaire du connecteur électrique mâle depuis la deuxième orientation angulaire vers la première orientation angulaire et limitent donc encore les risques de démontage par inadvertance du connecteur électrique mâle tout en permettant un démontage manuel.

Selon un mode de réalisation de l'invention, l'organe de blocage est élastiquement déformable et comporte un doigt d'encliquetage configuré pour coopérer avec le connecteur électrique mâle lorsque le connecteur électrique mâle est dans la deuxième orientation angulaire, de manière à empêcher un pivotement du connecteur électrique mâle vers la première orientation angulaire. Ces dispositions limitent encore les risques de démontage par inadvertance du connecteur électrique mâle.

Selon un mode de réalisation de l'invention, l'organe de blocage est venu de matière avec le corps de support. Une telle configuration de la base de charge facilite la fabrication de cette dernière, et en réduit les coûts de fabrication.

Selon un mode de réalisation de l'invention, le connecteur électrique mâle comporte une première partie de connecteur et une deuxième partie de connecteur qui s'étendent sensiblement perpendiculairement l'une par rapport à l'autre, la première partie de connecteur présentant un axe longitudinal central et étant configurée pour coopérer avec le connecteur électrique femelle prévu sur le boîtier de batterie de l'aspirateur.

Selon un mode de réalisation de l'invention, un axe longitudinal central de la première partie de connecteur est configuré pour s'étendre sensiblement verticalement lorsque le corps de support est fixé à un mur et la contrainte de serrage de la partie du connecteur électrique mâle entre l'organe de blocage et la surface de guidage s'exerce sensiblement verticalement.

Selon un mode de réalisation de l'invention, l'organe de blocage est configuré pour s'étendre en dessous de la deuxième partie de connecteur lorsque le corps de support est fixé à un mur. Une telle configuration de l'organe de blocage évite notamment tout risque de glissement vers le bas du connecteur électrique mâle, en particulier lorsque le boîtier de batterie est inséré dans le logement de réception selon un mouvement de déplacement vertical orienté vers le bas et que le connecteur électrique mâle coopère directement avec le connecteur électrique femelle.

Selon un mode de réalisation de l'invention, la distance de séparation entre la surface de guidage et l'organe de blocage correspond sensiblement à l'épaisseur de la deuxième partie de connecteur. De façon avantageuse, un rapport de l'épaisseur de la deuxième partie de connecteur sur la distance de séparation est compris entre 1 et 1,1.

Selon un mode de réalisation de l'invention, l'axe longitudinal central de la première partie de connecteur est sensiblement colinéaire avec l'axe de pivotement.

Selon un mode de réalisation de l'invention, l'axe longitudinal central de la première partie de connecteur est configuré pour s'étendre sensiblement verticalement lorsque le corps de support est fixé à un mur.

Selon le mode de réalisation de l'invention, le logement d'insertion comporte une première partie de logement configurée pour loger la première partie de connecteur et une deuxième partie de logement configurée pour loger la deuxième partie de connecteur.

Selon un mode de réalisation de l'invention, le connecteur électrique mâle est configuré être inséré dans le logement d'insertion selon un sens d'insertion orienté de bas en haut.

Selon le mode de réalisation de l'invention, l'organe de blocage délimite en partie une ouverture d'insertion débouchant dans le logement de réception, le connecteur électrique mâle étant configuré pour être inséré dans le logement de réception via l'ouverture d'insertion.

Selon le mode de réalisation de l'invention, l'ouverture d'insertion débouche dans une face inférieure du corps de support, c'est-à-dire est orientée vers le bas.

Selon le mode de réalisation de l'invention, l'organe de blocage est décalé, par exemple vers l'arrière ou vers l'avant, par rapport à la première partie de logement.

Selon le mode de réalisation de l'invention, l'ouverture d'insertion est située en regard de la première partie de logement. Ces dispositions facilitent encore l'insertion du connecteur électrique mâle dans le logement d'insertion.

Selon le mode de réalisation de l'invention, la deuxième partie de logement comporte une paroi de fond dans laquelle débouche la première partie de logement. De façon avantageuse, la surface de guidage est prévue sur la paroi de fond.

Selon un mode de réalisation de l'invention, le logement d'insertion est disposé en dessous du logement de réception.

Selon un mode de réalisation de l'invention, le logement d'insertion, et par exemple la première partie de logement, débouche dans le logement de réception, et le connecteur électrique mâle fait saillie dans le logement de réception.

Selon un mode de réalisation de l'invention, la base de charge comporte en outre une partie de protection configurée pour être fixée, par exemple de manière amovible, au corps de support, la partie de protection est configurée pour rendre inaccessible le connecteur électrique mâle lorsque la partie de protection est fixée au corps de support et que le corps de support est fixé à un mur. La présence d'une telle partie de protection évite tout risque qu'un enfant par exemple puisse accéder au connecteur électrique mâle en cours d'utilisation de la base de charge, c'est-à-dire lorsqu'une batterie rechargeable est en cours de charge sur la base de charge.

Selon un mode de réalisation de l'invention, la partie de protection est configurée pour être fixée à une partie inférieure du corps de support.

Selon un mode de réalisation de l'invention, la partie de protection comporte une paroi de protection configurée pour être située en regard du logement d'insertion et du connecteur électrique mâle lorsque la partie de protection est fixée au corps de support.

Selon un mode de réalisation de l'invention, la partie de protection est configurée pour s'étendre en partie en dessous de l'organe de blocage.

Selon un mode de réalisation de l'invention, la partie de protection est un capot de protection.

Selon un mode de réalisation de l'invention, la base de charge comporte un support d'accessoire configuré pour supporter au moins un accessoire d'aspirateur, le support d'accessoire étant configuré pour être fixé au corps de support et comportant la partie de protection.

Selon un mode de réalisation de l'invention, la base de charge comporte un organe de verrouillage configuré pour verrouiller la partie de protection sur le corps de support lorsque la partie de protection est fixée au corps de support. De façon avantageuse, l'organe de verrouillage est venu de matière avec la partie de protection.

Selon un mode de réalisation de l'invention, l'organe de verrouillage est élastiquement déformable entre une position de verrouillage dans laquelle l'organe de verrouillage est configuré pour coopérer avec le corps de support de manière à empêcher un retrait de la partie de protection du corps de support, et une position de libération dans laquelle l'organe de verrouillage est configuré pour libérer le corps de support de manière à autoriser un retrait de la partie de protection du corps de support.

Selon un mode de réalisation de l'invention, l'organe de verrouillage comporte une partie de manipulation, telle qu'une patte de manipulation, configurée pour être manipulée par un utilisateur de manière à déformer élastiquement l'organe de verrouillage dans la position de libération.

Selon un mode de réalisation de l'invention, la partie de manipulation est configurée pour être accessible depuis une face arrière du corps de support, et donc lorsque le corps de support n'est pas fixé à un mur.

Selon un mode de réalisation de l'invention, le corps de support comporte au moins un trou de fixation prévu sur le corps de support et configuré pour être traversé par une vis de fixation, de manière à fixer le corps de support au mur.

Selon un mode de réalisation de l'invention, l'au moins un trou de fixation est accessible depuis une face avant du corps de support.

Selon un mode de réalisation de l'invention, la base de charge comporte un bloc d'alimentation, également nommé adaptateur secteur, configuré pour être raccordé électriquement à une prise d'alimentation électrique, telle qu'une prise secteur et notamment une prise murale, le bloc d'alimentation étant relié au connecteur électrique mâle par un câble d'alimentation.

Selon un mode de réalisation de l'invention, le corps de support est configuré pour supporter l'aspirateur dans une position de stockage verticale.

Selon un mode de réalisation de l'invention, le logement de réception est ouvert vers le haut.

Selon un mode de réalisation de l'invention, le logement d'insertion débouche dans une face inférieure du corps de support. En d'autres termes, le logement d'insertion est ouvert vers le bas.

Selon un mode de réalisation de l'invention, le corps de support et le connecteur électrique mâle sont configurés de telle sorte qu'une fixation du connecteur électrique mâle dans le logement d'insertion comporte une première phase de fixation durant laquelle le connecteur électrique mâle est inséré dans le logement d'insertion selon une direction d'insertion et une deuxième phase de fixation durant laquelle le connecteur électrique mâle est pivoté par rapport au corps de support selon un axe de pivotement qui est sensiblement parallèle à la direction d'insertion.

Selon un mode de réalisation de l'invention, le corps de support et le connecteur électrique mâle sont configurés de telle sorte, durant la deuxième phase de fixation, le connecteur électrique mâle est pivoté, par rapport au corps de support et selon l'axe de pivotement, d'un angle de pivotement supérieur ou égal à 5°, de préférence supérieur à 45° et par exemple d'environ 90°.

La présente invention concerne en outre un ensemble d'aspiration comportant une base de charge selon la présente invention, et un aspirateur comportant un boîtier de batterie configuré pour être reçu dans le logement de réception.

Selon un mode de réalisation de l'invention, le boîtier de batterie est configuré pour être inséré dans le logement de réception selon une direction de montage qui est sensiblement verticale.

Selon un mode de réalisation de l'invention, la partie de protection est configurée pour être assemblée au corps de support selon une direction d'assemblage qui est sensiblement perpendiculaire à la direction de montage.

Selon un mode de réalisation de l'invention, l'aspirateur est un aspirateur portatif.

Selon un mode de réalisation de l'invention, l'aspirateur comporte :
- un carter principal équipé d'un conduit d'aspiration,
- un dispositif de séparation et de collecte de déchets monté sur le carter principal,
- un moteur d'aspiration logé dans le carter principal, le moteur d'aspiration étant configuré pour générer un flux d'air au travers du conduit d'aspiration et du dispositif de séparation et de collecte de déchets, et
- une poignée de préhension.

Selon un mode de réalisation de l'invention, le boîtier de batterie est relié à la poignée de préhension.

Selon un mode de réalisation de l'invention, l'aspirateur comporte une batterie rechargeable logée dans le boîtier de batterie et configurée pour alimenter électriquement l'aspirateur.

Selon un mode de réalisation de l'invention, la base de charge et l'aspirateur sont configurés de telle sorte que le conduit d'aspiration s'étend sensiblement verticalement lorsque l'aspirateur est en position de stockage.

Selon un mode de réalisation de l'invention, le dispositif de séparation et de collecte de déchets est de type cyclonique.

Selon un mode de réalisation de l'invention, la poignée de préhension a un axe longitudinal médian qui est incliné par rapport à un axe de moteur du moteur d'aspiration.

Selon un mode de réalisation de l'invention, le dispositif de séparation et de collecte de déchets s'étend selon un axe d'extension qui est sensiblement parallèle à l'axe de moteur du moteur d'aspiration.

### Brève description des figures

De toute façon l'invention sera bien comprise à l'aide de la description qui suit en référence aux dessins schématiques annexés représentant, à titre d'exemple non limitatif, une forme d'exécution de cet ensemble d'aspiration.
Figure 1 est une vue en perspective d'un ensemble d'aspiration selon la présente invention.
Figure 2 est une vue en coupe longitudinale de l'ensemble d'aspiration de la figure 1.
Figure 3 est une vue partielle en coupe longitudinale, à l'échelle agrandie, de l'ensemble d'aspiration de la figure 1.
Figure 4 est une vue de dessus d'une base de charge appartenant à l'ensemble d'aspiration de la figure 1.
Figure 5 est une vue en perspective avant de la base de charge de la figure 4.
Figure 6 est une vue en perspective arrière de la base de charge de la figure 4.
Figure 7 est une vue de face de la base de charge de la figure 4.
Figure 8 est une vue arrière de la base de charge de la figure 4.
Figure 9 est une vue à l'échelle agrandie d'un détail de la figure 8.
Figure 10 est une vue en coupe longitudinale de la base de charge de la figure 4.
Figure 11 est une vue en perspective avant de la base de charge de la figure 4 montrant une partie de protection en cours d'assemblage.
Figure 12 est une vue en perspective arrière de la base de charge de la figure 4 montrant la partie de protection en cours d'assemblage.
Figure 13 est une vue de dessous d'un corps de support de la base de charge de la figure 4.
Figure 14 est une vue partielle de dessous de la base de charge de la figure 4.
Figure 15 est une vue en perspective avant d'une base de charge selon une variante de réalisation de l'invention.
Figure 16 est une vue en perspective avant de la base de charge de la figure 13 équipée de plusieurs accessoires d'aspirateur.

### Description détaillée

Dans le présent document, les termes « avant », « arrière » et « supérieur » sont définis par rapport à une utilisation de l'aspirateur durant laquelle l'utilisateur tient l'aspirateur par la poignée de préhension et le maintient sensiblement horizontalement, et l'ouverture d'aspiration du conduit d'aspiration est située à l'opposé de l'utilisateur.

Dans le présent document, les termes « avant », « arrière », « vertical », « supérieur » et « inférieur » en relation avec la base de charge sont définis par rapport à une utilisation de la base de charge durant laquelle cette dernière est fixée à un mur et est apte à supporter l'aspirateur dans une position de stockage verticale.

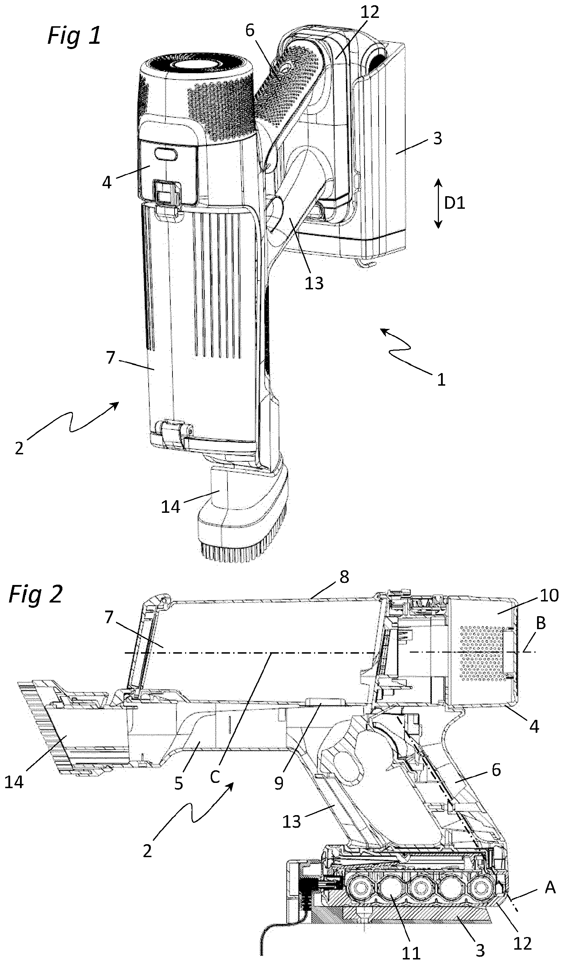

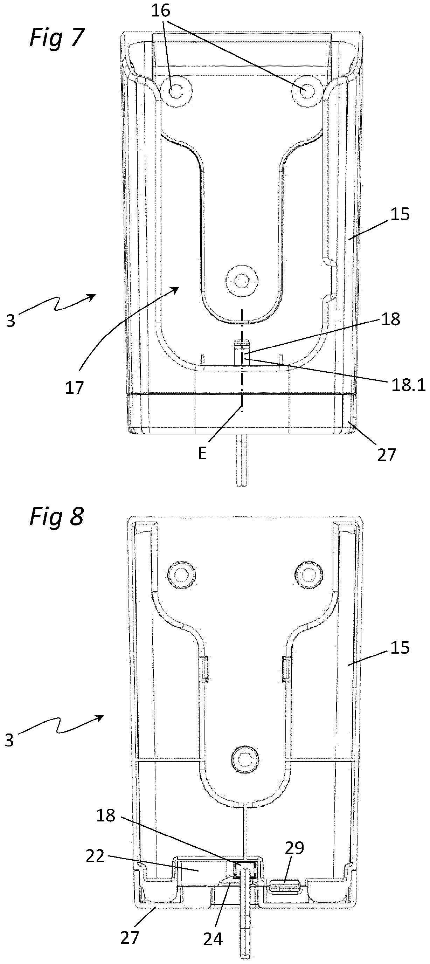

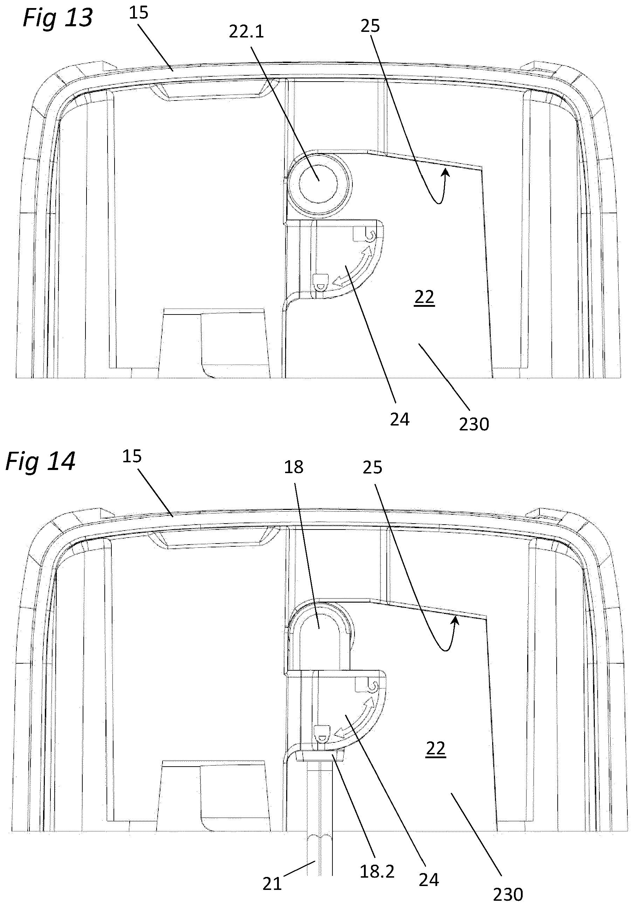

Les figures 1 à 16 représentent un ensemble d'aspiration 1 comportant un aspirateur 2, tel qu'un aspirateur portatif, et une base de charge 3 configurée pour supporter l'aspirateur 2 dans une position de stockage verticale.

L'aspirateur 2 comporte un carter principal 4 comportant un conduit d'aspiration 5 par lequel de l'air extérieur peut être aspiré par l'aspirateur 2. De façon avantageuse, le conduit d'aspiration 5 est disposé dans une partie avant du carter principal 4.

L'aspirateur 2 comporte en outre une poignée de préhension 6 permettant la préhension de l'aspirateur 2 par un utilisateur. De façon avantageuse, la poignée de préhension 6 est allongée et présente un axe longitudinal médian A.

L'aspirateur 2 comporte de plus un dispositif de séparation et de collecte de déchets 7 qui est monté de manière amovible sur le carter principal 4 et qui est relié fluidiquement au conduit d'aspiration 5. Le dispositif de séparation et de collecte de déchets 7 est avantageusement de type cyclonique, et comporte notamment un récipient de stockage de déchets 8, et un organe de séparation tubulaire (non visible sur les figures) logé dans le récipient de stockage de déchets 8 et délimitant avec ce dernier une chambre de séparation cyclonique. Le récipient de stockage de déchets 8 comporte plus particulièrement une ouverture d'admission d'air 9 qui est reliée fluidiquement au conduit d'aspiration 5. De façon avantageuse, le conduit d'aspiration 5 s'étend le long d'une surface externe du dispositif de séparation et de collecte de déchets 7.

Comme montré sur la figure 2, l'aspirateur 2 comporte en outre un moteur d'aspiration 10 qui présente un axe de moteur B et qui est logé dans le carter principal 4. Le moteur d'aspiration 10 est configuré pour générer un flux d'air au travers du conduit d'aspiration 5 et du dispositif de séparation et de collecte de déchets 7. Le moteur d'aspiration 10 comporte plus particulièrement un ventilateur et un moteur électrique configuré pour entraîner en rotation le ventilateur.

Selon le mode de réalisation représenté sur les figures, l'axe longitudinal médian A de la poignée de préhension 6 est incliné par rapport à l'axe de moteur B, et le dispositif de séparation et de collecte de déchets 7 s'étend selon un axe d'extension C qui est sensiblement parallèle à l'axe de moteur B, et qui peut par exemple être colinéaire avec l'axe de moteur B. De façon avantageuse, le moteur d'aspiration est situé à l'arrière de l'axe longitudinal médian A de la poignée de préhension 6, et le conduit d'aspiration 5 s'étend sensiblement parallèlement à l'axe de moteur B.

Comme montré sur la figure 2, l'aspirateur 2 comprend de plus une batterie rechargeable 11 configurée pour alimenter électriquement l'aspirateur 2, et en particulier le moteur d'aspiration 10. La batterie rechargeable 11, appelée également pack batterie, comprend plusieurs cellules de batterie. La batterie rechargeable 11 est avantageusement logée dans un boîtier de batterie 12 relié à la poignée de préhension 6, et plus particulièrement à une partie inférieure de la poignée de préhension 6. De façon avantageuse, le carter principal 4 comporte un montant 13 qui s'étend sensiblement parallèlement à la poignée de préhension 6 et entre le boîtier de batterie 12 et le carter principal 4.

Selon le mode de réalisation représenté sur les figures, l'aspirateur 2 comprend également un manchon de raccordement 14 relié fluidiquement au conduit d'aspiration 5 et auquel peuvent être raccordés différents accessoires d'aspirateur, et notamment un embout d'un tube d'aspiration, qui peut lui-même être raccordé à une tête d'aspiration pourvue d'une semelle destinée à être orientée vers un sol à nettoyer.

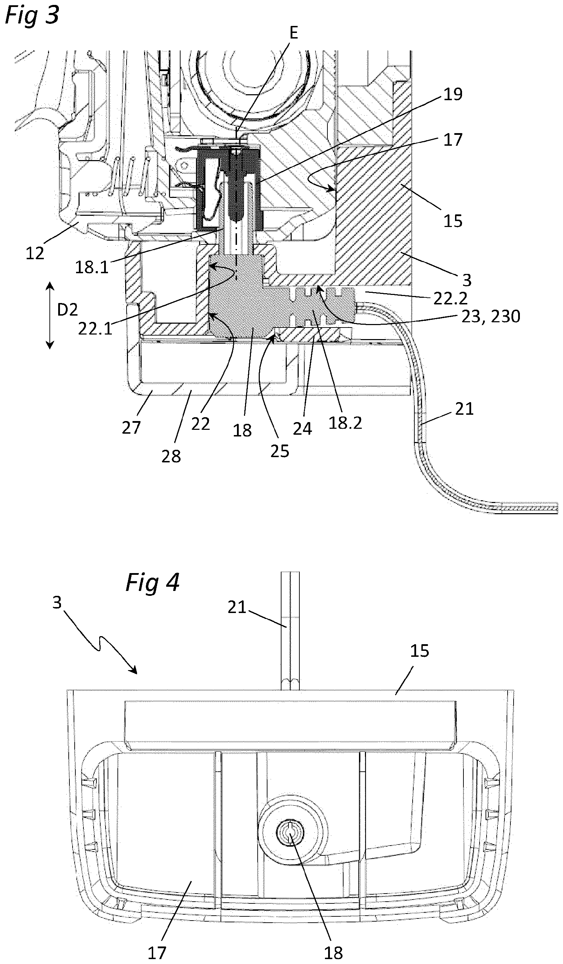

Comme montré plus particulièrement sur les figures 3 à 12, la base de charge 3 comporte un corps de support 15 configuré pour être fixé à un mur. A cet effet, le corps de support 15 comporte plusieurs trous de fixation 16 configurés pour être respectivement traversés par des vis de fixation, de manière à fixer le corps de support 15 au mur. De façon avantageuse, chaque trou de fixation 16 est accessible depuis une face avant du corps de support 15.

Le corps de support 15 comporte en outre un logement de réception 17 configuré pour loger au moins en partie le boîtier de batterie 12 de l'aspirateur 2. De façon avantageuse, le logement de réception 17 est ouvert vers le haut, et le boîtier de batterie 12 est configuré pour être inséré dans le logement de réception 17 selon une direction de montage D1 qui est sensiblement verticale et selon un mouvement de translation qui est orienté du haut vers le bas.

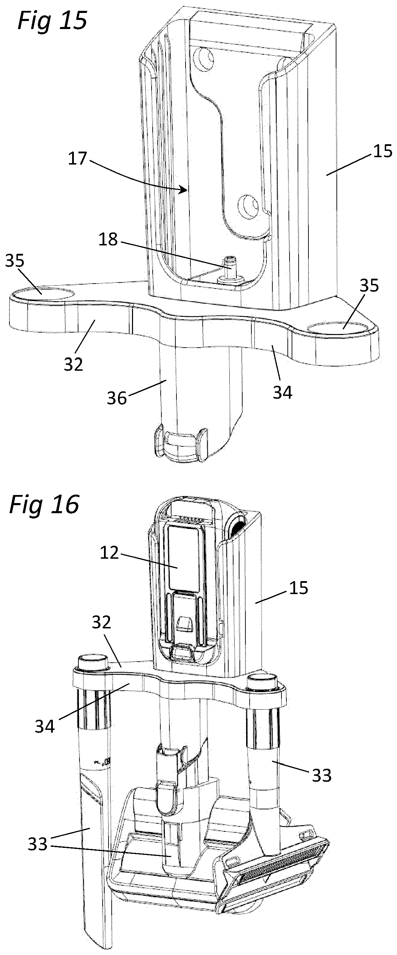

Comme montré sur la figure 16, le boîtier de batterie 12 peut être reçu dans le logement de réception 17 après avoir être retiré du carter principal 4. Cependant, le boîtier de batterie 12 peut également être reçu dans le logement de réception 17 tout en étant connecté au carter principal 4 (voir la figure 1). Dans ce cas, le corps de support 15 est alors configuré pour supporter l'aspirateur 2 dans une position de stockage, et de préférence dans une position de stockage verticale.

La base de charge 3 comporte en outre un connecteur électrique mâle 18 configuré pour coopérer avec un connecteur électrique femelle 19, prévu sur le boîtier de batterie 12, lorsque le boîtier de batterie 12 est reçu dans le logement de réception 17. Le connecteur électrique mâle 18 est coudé et comporte une première partie de connecteur 18.1 et une deuxième partie de connecteur 18.2 qui s'étendent sensiblement perpendiculairement l'une par rapport à l'autre. La première partie de connecteur 18.1 présente un axe longitudinal central E et est configurée pour coopérer avec le connecteur électrique femelle 19 prévu sur le boîtier de batterie 12. De façon avantageuse, la deuxième partie de connecteur 18.2 est flexible ou élastiquement déformable.

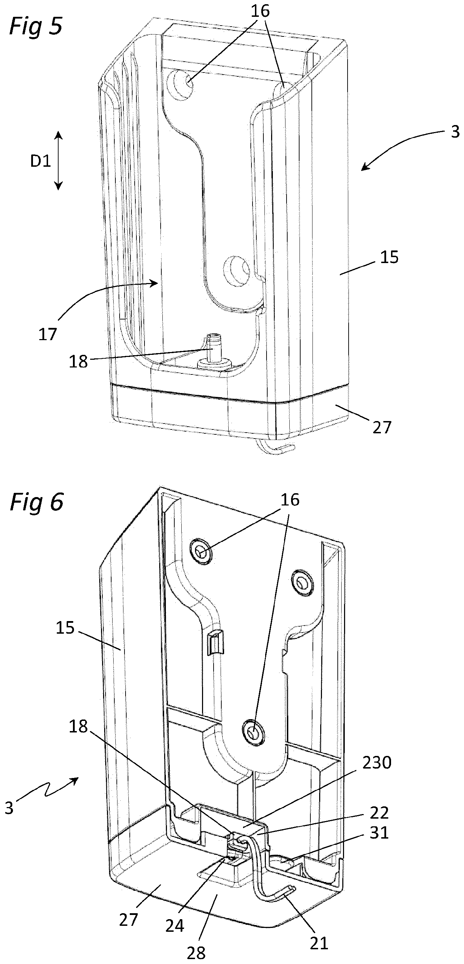

Comme montré notamment sur la figure 5, la première partie de connecteur 18.1 fait saillie dans le logement de réception 17, et l'axe longitudinal central E de la première partie de connecteur 18.1 est configuré pour s'étendre sensiblement verticalement lorsque le corps de support 15 est fixé à un mur.

La base de charge 3 comporte de plus un bloc d'alimentation (non visible sur les figures), également nommé adaptateur secteur, configuré pour être raccordé électriquement à une prise d'alimentation électrique, telle qu'une prise secteur et notamment une prise murale. Le bloc d'alimentation est relié à la deuxième partie de connecteur 18.2 par un câble d'alimentation 21.

Comme montré sur la figure 3, le connecteur électrique mâle 18 est fixé dans un logement d'insertion 22 délimité par le corps de support 15. Selon le mode de réalisation représenté sur les figures, le logement d'insertion 22 est disposé en dessous du logement de réception 17 et débouche dans une face inférieure du corps de support 15.

Le logement d'insertion 22 comporte plus particulièrement une première partie de logement 22.1 qui débouche dans le logement de réception 17 et qui est configurée pour loger la première partie de connecteur 18.1, et une deuxième partie de logement 22.2 configurée pour loger la deuxième partie de connecteur 18.2 et comportant une paroi de fond 23 dans laquelle débouche la première partie de logement 22.1.

Le corps de support 15 et le connecteur électrique mâle 18 sont configurés de telle sorte qu'une fixation du connecteur électrique mâle 18 dans le logement d'insertion 22 comporte une première phase de fixation durant laquelle le connecteur électrique mâle 18 est inséré dans la première partie de logement 22.1 selon une direction d'insertion D2 jusqu'à ce que la deuxième partie de connecteur 18.2 vienne en butée contre la paroi de fond 23 de la deuxième partie de logement 22.2, et une deuxième phase de fixation durant laquelle la deuxième partie de connecteur 18.2 est pivotée dans la deuxième partie de logement 22.2 et par rapport au corps de support 15 selon un axe de pivotement qui est sensiblement parallèle à la direction d'insertion D2.

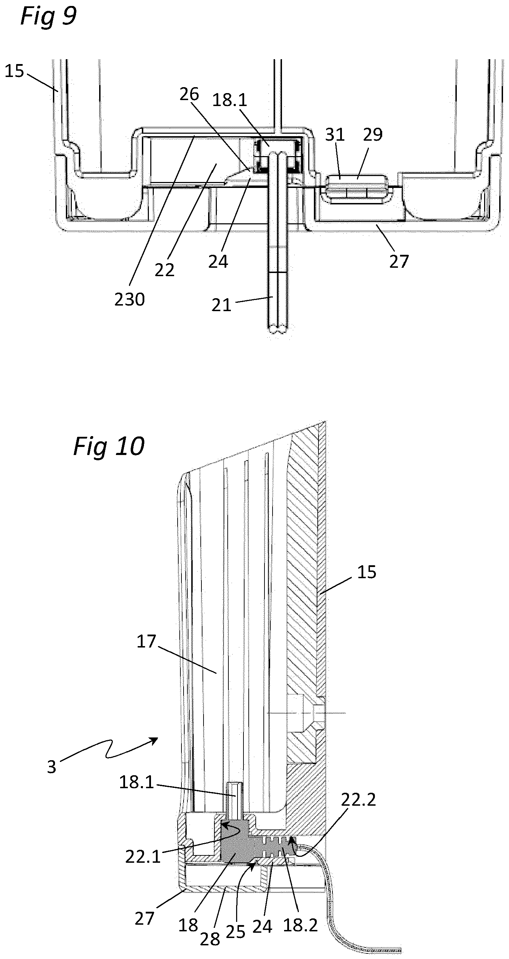

Comme montré sur les figures 3 et 9, la base de charge 3 comporte de plus un organe de blocage 24, tel qu'une languette de blocage, qui est situé en regard de la paroi de fond 23 de la deuxième partie de logement 22.2 et qui est espacé de ladite paroi de fond 23. L'organe de blocage 24 est configuré pour s'étendre en dessous de la deuxième partie de connecteur 18.2 lorsque le corps de support 15 est fixé à un mur. De façon avantageuse, l'organe de blocage 24 est venu de matière avec le corps de support 15. Cependant, selon une variante de réalisation de l'invention, l'organe de blocage 24 pourrait être rapporté sur et fixé au corps de support 15.

L'organe de blocage 24 est décalé vers l'arrière par rapport à la première partie de logement 22.1, et délimite en partie une ouverture d'insertion 25 débouchant dans le logement de réception 17 et située en regard de la première partie de logement 22.1. De façon avantageuse, l'ouverture d'insertion 25 est délimitée par l'organe de blocage 24 et le corps de support 15.

L'organe de blocage 24 est plus particulièrement configuré pour autoriser une insertion du connecteur électrique mâle 18 dans le logement d'insertion 22 via l'ouverture d'insertion 25 lorsque le connecteur électrique mâle 18 présente une première orientation angulaire par rapport à l'axe de pivotement, et pour autoriser ensuite un pivotement du connecteur électrique mâle 18, par rapport au corps de support 15 et selon l'axe de pivotement, de la première orientation angulaire à une deuxième orientation angulaire qui est différente de la première orientation angulaire. L'organe de blocage 24 est en outre configuré pour bloquer en translation le connecteur électrique mâle 18 par rapport au corps de support 15 et selon la direction d'insertion D2 lorsque le connecteur électrique mâle 18 est dans la deuxième orientation angulaire. Une telle configuration de l'organe de blocage 24 évite notamment les risques de glissement vers le bas du connecteur électrique mâle 18, en particulier lorsque le boîtier de batterie 12 est reçu dans le logement de réception 17 et que le connecteur électrique femelle 19, enfiché autour de la première partie de connecteur 18.1, tend à pousser vers le bas le connecteur électrique mâle 18.

De façon avantageuse, l'axe longitudinal central E de la première partie de connecteur 18.1 est sensiblement colinéaire avec l'axe de pivotement.

Les première et deuxième orientations angulaires sont décalées angulairement par rapport à l'axe de pivotement d'un angle de pivotement supérieur ou égal à 5°, de préférence supérieur à 45° et par exemple d'environ 90°. Ainsi, le corps de support 15 et le connecteur électrique mâle 18 sont configurés de telle sorte, durant la deuxième phase de fixation, le connecteur électrique mâle 18 est pivoté, par rapport au corps de support 15 et selon l'axe de pivotement, d'un angle de pivotement supérieur ou égal à 5°, de préférence supérieur à 45° et par exemple d'environ 90°.

De façon avantageuse, lorsque le connecteur électrique mâle 18 est pivoté de la première orientation angulaire à la deuxième orientation angulaire, la deuxième partie de connecteur 18.2 est déplacée, et par exemple glissée, entre l'organe de blocage 24 et une surface de guidage 230 qui est prévue sur la paroi de fond 23 de la deuxième partie de logement 22.2 et qui fait donc face à l'organe de blocage 24.

Avantageusement, dans la deuxième orientation angulaire, la deuxième partie de connecteur 18.2 est faiblement contrainte, selon une direction verticale, entre l'organe de blocage 24 et la surface de guidage 230. Autrement dit, dans la deuxième orientation angulaire, la deuxième partie de connecteur 18.2 est serrée entre l'organe de blocage 24 et la surface de guidage 230 avec une intensité de force de serrage qui autorise un démontage manuel du le connecteur électrique mâle 18. Ces dispositions limitent les risques de pivotement involontaire du connecteur électrique mâle 18 depuis la deuxième orientation angulaire vers la première orientation angulaire et limitent donc les risques de démontage par inadvertance du connecteur électrique mâle 18 tout en permettant un démontage manuel de ce dernier.

Selon le mode de réalisation représenté sur les figures, l'organe de blocage 24 est également configuré pour empêcher un pivotement du connecteur électrique mâle 18 par rapport au corps de support 15 et selon l'axe de pivotement lorsque le connecteur électrique mâle 18 est dans la deuxième orientation angulaire. A cet effet, l'organe de blocage 24 est élastiquement déformable et comporte, au niveau de son extrémité libre, un doigt d'encliquetage 26 (voir la figure 9) configuré pour coopérer avec la deuxième partie de connecteur 18.2 lorsque le connecteur électrique mâle 18 est dans la deuxième orientation angulaire, de manière à empêcher un pivotement du connecteur électrique mâle 18 vers la première orientation angulaire.

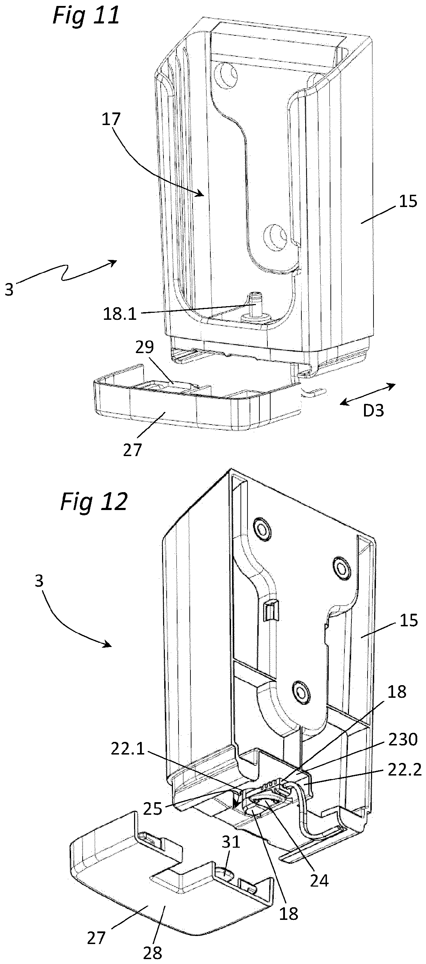

Comme montré sur les figures 11 et 12, la base de charge 3 comporte en outre une partie de protection 27 configurée pour être fixée, par exemple de manière amovible, à une partie inférieure du corps de support 15 et pour rendre inaccessible le connecteur électrique mâle 18 lorsque la partie de protection 27 est fixée au corps de support 15 et que le corps de support 15 est fixé à un mur. Selon le mode de réalisation représenté sur les figures 1 à 14, la partie de protection 27 est formée par un capot de protection.

La partie de protection 27 comporte plus particulièrement une paroi de protection 28 configurée pour être située en regard du logement d'insertion 22 et du connecteur électrique mâle 18 et pour s'étendre en partie en dessous de l'organe de blocage 24 lorsque la partie de protection 27 est fixée au corps de support 15.

Selon le mode de réalisation représenté sur les figures, la partie de protection 27 est configurée pour être assemblée au corps de support 15 selon une direction d'assemblage D3 qui est sensiblement perpendiculaire à la direction de montage D1.

Selon le mode de réalisation représenté sur les figures, la base de charge 3 comporte en outre un organe de verrouillage 29, tel qu'une languette de verrouillage, configuré pour verrouiller la partie de protection 27 sur le corps de support 15 lorsque la partie de protection 27 est fixée au corps de support 15. De façon avantageuse, l'organe de verrouillage 29 est venu de matière avec la partie de protection 27, et est élastiquement déformable entre une position de verrouillage dans laquelle l'organe de verrouillage 29 est configuré pour coopérer avec le corps de support 15 de manière à empêcher un retrait de la partie de protection 27 du corps de support 15, et une position de libération dans laquelle l'organe de verrouillage 29 est configuré pour libérer le corps de support 15 de manière à autoriser un retrait de la partie de protection 27 du corps de support 15.

Selon le mode de réalisation représenté sur les figures, l'organe de verrouillage 29 comporte une partie de manipulation 31, telle qu'une patte de manipulation, configurée pour être manipulée par un utilisateur de manière à déformer élastiquement l'organe de verrouillage 29 dans la position de libération. De façon avantageuse, la partie de manipulation 31 est configurée pour être accessible depuis une face arrière du corps de support 15, et donc uniquement lorsque le corps de support 15 n'est pas fixé à un mur. Une telle configuration de l'organe de verrouillage 29 évite tout risque de démontage de la partie de protection 27 lorsque le corps de support 15 est fixé à un mur, et donc tout risque qu'un enfant par exemple puisse accéder au connecteur électrique mâle 18 en cours d'utilisation de la base de charge 3, c'est-à-dire lorsque la batterie rechargeable 11 est en cours de charge.

Selon une variante de réalisation de l'invention représentée sur les figures 15 et 16, la base de charge 3 pourrait comporter un support d'accessoire 32 configuré pour supporter un ou plusieurs accessoires d'aspirateur 33. Selon une telle variante de réalisation de l'invention, le support d'accessoire 32 comporte la partie de protection 27 et une partie de support 34 configurée pour supporter le ou les accessoires d'aspirateur 33. A cet effet, la partie de support 34 peut par exemple comporter un ou plusieurs orifices de montage 35 dans lequel ou chacun desquels peut être monté un accessoire d'aspirateur 33 respectif, et un élément de raccordement 36 auquel peur être raccordé un accessoire d'aspirateur 33.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Base de charge (3) pour aspirateur (2), comportant au moins :
- un corps de support (15) configuré pour être fixé à un mur, le corps de support (15) comportant un logement de réception (17) configuré pour recevoir au moins en partie un boîtier de batterie (12) de l'aspirateur (2),
- un connecteur électrique mâle (18) configuré pour être relié électriquement à un connecteur électrique femelle (19), prévu sur le boîtier de batterie (12), lorsque le boîtier de batterie (12) est reçu dans le logement de réception (17), le connecteur électrique mâle (18) étant coudé et étant fixé dans un logement d'insertion (22) délimité par le corps de support (15),
- la base de charge (3) comporte en outre un organe de blocage (24) configuré pour bloquer le connecteur électrique mâle (18) dans le logement d'insertion (22),
**caractérisée en ce que** l'organe de blocage (24) est configuré pour autoriser une insertion du connecteur électrique mâle (18) dans le logement d'insertion (22) selon une direction d'insertion (D2) lorsque le connecteur électrique mâle (18) présente une première orientation angulaire par rapport à un axe de pivotement qui est sensiblement parallèle à la direction d'insertion (D2), et pour autoriser ensuite un pivotement du connecteur électrique mâle (18), par rapport au corps de support (15) et selon l'axe de pivotement, de la première orientation angulaire à une deuxième orientation angulaire qui est différente de la première orientation angulaire, l'organe de blocage (24) étant configuré pour bloquer en translation le connecteur électrique mâle (18) par rapport au corps de support (15) et selon la direction d'insertion (D2) lorsque le connecteur électrique mâle (18) est reçu dans le logement d'insertion (22) et est dans la deuxième orientation angulaire.

2. Base de charge (3) selon la revendication 1, dans laquelle le corps de support (15) est configuré pour supporter l'aspirateur (2) dans une position de stockage, le logement de réception (17) étant configuré pour recevoir au moins en partie le boîtier de batterie (12) de l'aspirateur (2) lorsque l'aspirateur (2) est en position de stockage.

3. Base de charge (3) selon la revendication 1 ou 2, dans laquelle les première et deuxième orientations angulaires sont décalées angulairement par rapport à l'axe de pivotement d'un angle de pivotement supérieur ou égal à 5°, de préférence supérieur à 45°.

4. Base de charge (3) selon l'une quelconque des revendications 1 à 3, dans laquelle, lorsque le connecteur électrique mâle (18) est pivoté de la première orientation angulaire à la deuxième orientation angulaire, une partie du connecteur électrique mâle (18) est déplacée entre l'organe de blocage (24) et une surface de guidage (230) qui est prévue sur le corps de support (15) et qui est située en regard de l'organe de blocage (24).

5. Base de charge (3) selon l'une quelconque des revendications 1 à 4, dans laquelle l'organe de blocage (24) est configuré pour bloquer en rotation le connecteur électrique mâle (18) par rapport au corps de support (15) et selon l'axe de pivotement lorsque le connecteur électrique mâle (18) est dans la deuxième orientation angulaire.

6. Base de charge (3) selon l'une quelconque des revendications 1 à 5, dans laquelle l'organe de blocage (24) est élastiquement déformable et comporte un doigt d'encliquetage (26) configuré pour coopérer avec le connecteur électrique mâle (18) lorsque le connecteur électrique mâle (18) est dans la deuxième orientation angulaire, de manière à empêcher un pivotement du connecteur électrique mâle (18) vers la première orientation angulaire.

7. Base de charge (3) selon l'une quelconque des revendications 1 à 6, dans laquelle l'organe de blocage (24) est venu de matière avec le corps de support (15).

8. Base de charge (3) selon l'une quelconque des revendications 1 à 7, dans laquelle l'organe de blocage (24) délimite en partie une ouverture d'insertion (25) débouchant dans le logement de réception (17), le connecteur électrique mâle (18) étant configuré pour être inséré dans le logement de réception (17) via l'ouverture d'insertion (25).

9. Base de charge (3) selon l'une quelconque des revendications 1 à 8, dans laquelle le connecteur électrique mâle (18) comporte une première partie de connecteur (18.1) et une deuxième partie de connecteur (18.2) qui s'étendent sensiblement perpendiculairement l'une par rapport à l'autre, la première partie de connecteur (18.1) présentant un axe longitudinal central (E) et étant configurée pour coopérer avec le connecteur électrique femelle (19) prévu sur le boîtier de batterie (12) de l'aspirateur (2).

10. Base de charge (3) selon la revendication 9, dans laquelle l'axe longitudinal central (E) de la première partie de connecteur (18.1) est sensiblement colinéaire avec l'axe de pivotement.

11. Base de charge (3) selon la revendication 9 ou 10, dans laquelle l'axe longitudinal central (E) de la première partie de connecteur (18.1) est configuré pour s'étendre sensiblement verticalement lorsque le corps de support (15) est fixé à un mur.

12. Base de charge (3) selon l'une quelconque des revendications 1 à 11, dans laquelle le logement d'insertion (22) est disposé en dessous du logement de réception (17) lorsque le corps de support (15) est fixé à un mur.

13. Base de charge (3) selon l'une quelconque des revendications 1 à 12, dans laquelle le logement d'insertion (22) débouche dans le logement de réception (17), et le connecteur électrique mâle (18) fait saillie dans le logement de réception (17).

14. Base de charge (3) selon l'une quelconque des revendications 1 à 13, laquelle comporte en outre une partie de protection (27) configurée pour être fixée au corps de support (15), la partie de protection (27) est configurée pour rendre inaccessible le connecteur électrique mâle (18) lorsque la partie de protection (27) est fixée au corps de support (15) et que le corps de support (15) est fixé à un mur.

15. Base de charge (3) selon la revendication 14, laquelle comporte un support d'accessoire (32) configuré pour supporter au moins un accessoire d'aspirateur (33), le support d'accessoire (32) étant configuré pour être fixé au corps de support (15) et comportant la partie de protection (27).

16. Ensemble d'aspiration (1) comportant une base de charge (3) selon l'une quelconque des revendications précédentes, et un aspirateur (2) comportant un boîtier de batterie (12) configuré pour être reçu dans le logement de réception (17).

## Patentansprüche

1. Ladebasis (3) für einen Staubsauger (2), die mindestens Folgendes umfasst:
- einen Haltekörper (15), der dazu konfiguriert ist, an einer Wand befestigt zu werden, wobei der Haltekörper (15) ein Aufnahmefach (17) umfasst, das dazu konfiguriert ist, mindestens teilweise ein Batteriegehäuse (12) des Staubsaugers (2) aufzunehmen,
- einen elektrischen Stecker (18), der dazu konfiguriert ist, elektrisch mit einer elektrischen Buchse (19) verbunden zu werden, die an dem Batteriegehäuse (12) vorgesehen ist, wenn das Batteriegehäuse (12) in dem Aufnahmefach (17) aufgenommen ist, wobei der elektrische Stecker (18) gebogen und in einem Einführungsfach (22) befestigt ist, das durch den Haltekörper (15) definiert ist,
- wobei die Ladebasis (3) ferner ein Blockierglied (24) umfasst, das dazu konfiguriert ist, den elektrischen Stecker (18) im Einführungsfach (22) zu blockieren,
**dadurch gekennzeichnet, dass** das Blockierglied (24) dazu konfiguriert ist, ein Einführen des elektrischen Steckers (18) in das Einführungsfach (22) in einer Einführungsrichtung (D2) zu ermöglichen, wenn der elektrische Stecker (18) eine erste Winkelausrichtung im Verhältnis zu einer Schwenkachse aufweist, die im Wesentlichen parallel zur Einführungsrichtung (D2) verläuft, und anschließend ein Schwenken des elektrischen Steckers (18) im Verhältnis zu dem Haltekörper (15) und entlang der Schwenkachse von einer ersten Winkelausrichtung zu einer zweiten Winkelausrichtung, die sich von der ersten Winkelausrichtung unterscheidet, zu ermöglichen, wobei das Blockierglied (24) dazu konfiguriert ist, den elektrischen Stecker (18) im Verhältnis zu dem Haltekörper (15) und in der Einführungsrichtung (D2) translatorisch zu blockieren, wenn der elektrische Stecker (18) in dem Einführungsfach (22) aufgenommen ist und sich in der zweiten Winkelausrichtung befindet.

2. Ladebasis (3) nach Anspruch 1, wobei der Haltekörper (15) dazu konfiguriert ist, den Staubsauger (2) in der Aufbewahrungsposition zu halten, wobei das Aufnahmefach (17) dazu konfiguriert ist, mindestens teilweise das Batteriegehäuse (12) des Staubsaugers (2) aufzunehmen, wenn sich der Staubsauger (2) in der Aufbewahrungsposition befindet.

3. Ladebasis (3) nach Anspruch 1 oder 2, wobei die erste und die zweite Winkelausrichtung im Verhältnis zur Schwenkachse um einen Schwenkwinkel von mehr als oder gleich 5°, vorzugsweise mehr als 45°, winkelversetzt sind.

4. Ladebasis (3) nach einem der Ansprüche 1 bis 3, wobei, wenn der elektrische Stecker (18) von der ersten Winkelausrichtung in die zweite Winkelausrichtung geschwenkt wird, ein Teil des elektrischen Steckers (18) zwischen dem Blockierglied (24) und einer Führungsoberfläche (230), die auf dem Haltekörper (15) vorgesehen ist und sich gegenüber des Blockierglieds (24) befindet, verschoben wird.

5. Ladebasis (3) nach einem der Ansprüche 1 bis 4, wobei das Blockierglied (24) dazu konfiguriert ist, den elektrischen Stecker (18) im Verhältnis zu dem Haltekörper (15) und entlang der Schwenkachse in der Drehung zu blockieren, wenn sich der elektrische Stecker (18) in der zweiten Winkelausrichtung befindet.

6. Ladebasis (3) nach einem der Ansprüche 1 bis 5, wobei das Blockierglied (24) elastisch verformbar ist und eine Einrastklinke (26) umfasst, die dazu konfiguriert ist, mit dem elektrischen Stecker (18) zusammenzuwirken, wenn sich der elektrische Stecker (18) in der zweiten Winkelausrichtung befindet, um ein Schwenken des elektrischen Steckers (18) in die erste Winkelausrichtung zu verhindern.

7. Ladebasis (3) nach einem der Ansprüche 1 bis 6, wobei das Blockierglied (24) aus einem Material mit dem Haltekörper (15) besteht.

8. Ladebasis (3) nach einem der Ansprüche 1 bis 7, wobei das Blockierglied (24) teilweise eine Einführungsöffnung (25) begrenzt, die an das Aufnahmefach (17) mündet, wobei der elektrische Stecker (18) dazu konfiguriert ist, über die Einführungsöffnung (25) in das Aufnahmefach (17) eingeführt zu werden.

9. Ladebasis (3) nach einem der Ansprüche 1 bis 8, wobei der elektrische Stecker (18) einen ersten Teil des Steckers (18.1) und einen zweiten Teil des Steckers (18.2) umfasst, die sich im Wesentlichen senkrecht zueinander erstrecken, wobei der erste Teil des Steckers (18.1) eine zentrale Längsachse (E) aufweist und dazu konfiguriert ist, mit der elektrischen Buchse (19) zusammenzuwirken, die am Batteriegehäuse (12) des Staubsaugers (2) vorgesehen ist.

10. Ladebasis (3) nach Anspruch 9, wobei die zentrale Längsachse (E) des ersten Teils des Steckers (18.1) im Wesentlichen kolinear mit der Schwenkachse ist.

11. Ladebasis (3) nach Anspruch 9 oder 10, wobei die zentrale Längsachse (E) des ersten Teils des Steckers (18.1) dazu konfiguriert ist, sich im Wesentlichen vertikal zu erstrecken, wenn der Haltekörper (15) an einer Wand befestigt ist.

12. Ladebasis (3) nach einem der Ansprüche 1 bis 11, wobei das Einführungsfach (22) unterhalb des Aufnahmefachs (17) angeordnet ist, wenn der Haltekörper (15) an einer Wand befestigt ist.

13. Ladebasis (3) nach einem der Ansprüche 1 bis 12, wobei das Einführungsfach (22) in das Aufnahmefach (17) mündet, und der elektrische Stecker (18) in das Aufnahmefach (17) hineinragt.

14. Ladebasis (3) nach einem der Ansprüche 1 bis 13, die ferner ein Schutzteil (27) umfasst, das dazu konfiguriert ist, am Haltekörper (15) befestigt zu sein, wobei das Schutzteil (27) dazu konfiguriert ist, den elektrischen Strecker (18) unzugänglich zu machen, wenn das Schutzteil (27) am Haltekörper (15) befestigt ist und der Haltekörper (15) an einer Wand befestigt ist.

15. Ladebasis (3) nach Anspruch 14, die eine Zubehörhalterung (32) umfasst, die dazu konfiguriert ist, mindestens ein Staubsaugerzubehör (33) zu halten, wobei die Zubehörhalterung (32) dazu konfiguriert ist, am Haltekörper (15) befestigt zu sein, und das Schutzteil (27) umfasst.

16. Staubsaugeranordnung (1), die eine Ladebasis (3) nach einem der vorhergehenden Ansprüche und einen Staubsauger (2) umfasst, der ein Batteriegehäuse (12) umfasst, das dazu konfiguriert ist, im Aufnahmefach (17) aufgenommen zu werden.

## Claims

1. A charging base (3) for a vacuum cleaner (2), including at least:
- a support body (15) configured to be fastened to a wall, the support body (15) including a receiving housing (17) configured to at least partially receive a battery case (12) of the vacuum cleaner (2),
- a male electrical connector (18) configured to be electrically connected to a female electrical connector (19), provided on the battery case (12), when the battery case (12) is received in the receiving housing (17), the male electrical connector (18) being angled and being fastened in an insertion housing (22) delimited by the support body (15),
the charging base (3) further includes a blocking member (24) configured to block the male electrical connector (18) in the insertion housing (22),
**characterized in that** the blocking member (24) is configured to allow insertion of the male electrical connector (18) into the insertion housing (22) along an insertion direction (D2) when the male electrical connector (18) has a first angular orientation relative to a pivot axis which is substantially parallel to the insertion direction (D2), and to then allow pivoting of the male electrical connector (18), relative to the support body (15) and along the pivot axis, from the first angular orientation to a second angular orientation which is different from the first angular orientation, the blocking member (24) being configured to block in translation the male electrical connector (18) relative to the support body (15) and along the insertion direction (D2) when the male electrical connector (18) is received in the insertion housing (22) and is in the second angular orientation.

2. The charging base (3) according to claim 1, wherein the support body (15) is configured to support the vacuum cleaner (2) in a storage position, the receiving housing (17) being configured to at least partially receive the battery case (12) of the vacuum cleaner (2) when the vacuum cleaner (2) is in the storage position.

3. The charging base (3) according to claim 1 or 2, wherein the first and second angular orientations are angularly offset relative to the pivot axis by a pivot angle greater than or equal to 5°, preferably greater than 45°.

4. The charging base (3) according to any one of claims 1 to 3, wherein, when the male electrical connector (18) is pivoted from the first angular orientation to the second angular orientation, a part of the male electrical connector (18) is moved between the blocking member (24) and a guide surface (230) which is provided on the support body (15) and which is located facing the blocking member (24).

5. The charging base (3) according to any one of claims 1 to 4, wherein the blocking member (24) is configured to block in rotation the male electrical connector (18) relative to the support body (15) and along the pivot axis when the male electrical connector (18) is in the second angular orientation.

6. The charging base (3) according to any one of claims 1 to 5, wherein the blocking member (24) is elastically deformable and includes a latching finger (26) configured to cooperate with the male electrical connector (18) when the male electrical connector (18) is in the second angular orientation, so as to prevent the male electrical connector (18) from pivoting towards the first angular orientation.

7. The charging base (3) according to any one of claims 1 to 6, wherein the blocking member (24) is made in one piece with the support body (15).

8. The charging base (3) according to any one of claims 1 to 7, wherein the blocking member (24) partially delimits an insertion opening (25) emerging into the receiving housing (17), the male electrical connector (18) being configured to be inserted into the receiving housing (17) via the insertion opening (25).

9. The charging base (3) according to any one of claims 1 to 8, wherein the male electrical connector (18) includes a first connector part (18.1) and a second connector part (18.2) which extend substantially perpendicular to each other, the first connector part (18.1) having a central longitudinal axis (E) and being configured to cooperate with the female electrical connector (19) provided on the battery case (12) of the vacuum cleaner (2).

10. The charging base (3) according to claim 9, wherein the central longitudinal axis (E) of the first connector part (18.1) is substantially colinear with the pivot axis.

11. The charging base (3) according to claim 9 or 10, wherein the central longitudinal axis (E) of the first connector part (18.1) is configured to extend substantially vertically when the support body (15) is fastened to a wall.

12. The charging base (3) according to any one of claims 1 to 11, wherein the insertion housing (22) is disposed below the receiving housing (17) when the support body (15) is fastened to a wall.

13. The charging base (3) according to any one of claims 1 to 12, wherein the insertion housing (22) emerges into the receiving housing (17), and the male electrical connector (18) projects into the receiving housing (17).

14. The charging base (3) according to any one of claims 1 to 13, which further includes a protective part (27) configured to be fastened to the support body (15), the protective part (27) is configured to render the male electrical connector (18) inaccessible when the protective part (27) is fastened to the support body (15) and the support body (15) is fastened to a wall.

15. The charging base (3) according to claim 14, which includes an accessory support (32) configured to support at least one vacuum cleaner accessory (33), the accessory support (32) being configured to be fastened to the support body (15) and including the protective part (27).

16. A suction assembly (1) including a charging base (3) according to any one of the preceding claims, and a vacuum cleaner (2) including a battery case (12) configured to be received in the receiving housing (17).
